# EUROPÄISCHE PATENTSCHRIFT

(11) **EP 1 171 963 B1**
(45) Veröffentlichungstag und Bekanntmachung des Hinweises auf die Patenterteilung: **21.11.2007**
(21) Anmeldenummer: 00910559.4
(22) Anmeldetag: 23.02.2000
(51) Int. Cl.: H04B 3/54, H04B 7/26

(54) **NUTZUNG DES NIEDERSPANNUNGSNETZES IN EINEM GEBÄUDE ZUM ÜBERTRAGEN UND ABSTRAHLEN VON HOCHFREQUENZMOBILFUNKSIGNALEN**
USE OF THE LOW-VOLTAGE NETWORK IN A BUILDING FOR THE TRANSMISSION AND BROADCASTING OF HIGH-FREQUENCY MOBILE TELEPHONE SIGNALS
UTILISATION DU RESEAU BASSE TENSION D'UN BATIMENT POUR LA TRANSMISSION ET LA DIFFUSION DE SIGNAUX DE TELEPHONIE MOBILE HAUTE FREQUENCE

(30) Priorität: 27.04.1999 DE 19920024
(43) Veröffentlichungstag der Anmeldung: 16.01.2002
(73) Patentinhaber: Vodafone Holding GmbH, 40213 Düsseldorf (DE)
(72) Erfinder: KÖTTNITZ, Jürgen, D-13589 Berlin (DE); KÜMMEL, Wolfgang, D-13187 Berlin (DE)
(74) Vertreter: Meissner, Peter E.
(86) Internationale Anmeldenummer: PCT/DE2000/000560
(87) Internationale Veröffentlichungsnummer: WO 2000/065741

(56) Entgegenhaltungen:
- WO-A-99/00906
- GB-A- 2 330 049

## Beschreibung

Die Erfindung betrifft eine Vorrichtung zur Hochfrequenz-Einspeisung in Niederfrequenz-Energieleitungen.

Bei der Verwendung von Mobilfunkgeräten in Gebäuden ist problematisch, daß die Gebäude die Ausbreitung von elektromagnetischen Wellen und damit die Mobilfunkkommunikation beeinträchtigen. Dies ist insbesondere bei modernen Gebäuden in Stahlbetonbauweise und/oder mit metallisch bedämpften Isolierglasscheiben der Fall, da Stahlbeton und Isolierglasscheiben als Faradayscher Käfig wirken und durch sehr hohe Dämpfungswerte die Mobilkommunikation erheblich beeinträchtigen.

Es ist bekannt, in derartig elektromagnetisch abgeschirmten Gebäuden zur Ermöglichung der Mobilkommunikation in die Gebäude integrierte Antennen vorzusehen, was eine freie Bewegung von Mobilfunkteilnehmern im Gebäude erlaubt. Hierzu werden in der Regel in verschiedenen Etagen von Gebäuden neben Antennen auch eine große Anzahl von Verteilern, Filtern und Kopplern benötigt, und es ist eine relativ aufwendige Kabelverlegung erforderlich.

Problematisch hierbei ist auch, daß bei zunehmender Auslastung der Mobilfunknetze und immer kleiner werdenden Mobilfunk-Zellradien Antennen in niedrigerer Höhe angeordnet werden und mit kleinerer Sendeleistung betrieben werden, was zur Folge hat, daß sich die Inhouse-Versorgung trotz fortlaufender Mobilfunk-Zellen-Verdichtung nicht in vergleichbarem Maße wie die Versorgung außerhalb von Gebäuden verbessert.

Ein Verfahren zur Hochfrequenz-Einspeisung in ein Stromnetz ist aus WO-A-9900906 bekannt.

Ziel der Erfindung ist dehalb eine möglichst einfache, effiziente, kostengünstige und wirksame Verbesserung der Mobilfunk-Versorgung in Gebäuden. Die Aufgabe wird durch die Gegenstände der unabhängigen Ansprüche gelöst.

Die Erfindung verbessert einfach, kostengünstig, effizient und wirksam die Funkversorgung in Gebäuden. Die Verwendung eines in nahezu allen Gebäuden vorhandenen Kabelnetzes in Form der Stromleitungen erlaubt eine Mobilfunkversorgung in einem Gebäude ohne großen Installationsaufwand. Dabei wirkt das Kabelnetz, insbesondere das Stromleitungsnetz, in einem Gebäude als strahlendes Kabel, strahlt also die in dieses Netz eingekoppelten Hochfrequenzsignale an den Innenraum des Gebäudes in großem Umfange ab und ermöglicht derart eine gute Mobilfunkversorgung des Hauses. Die Leitungen zur Stromversorgung in Gebäuden sind in der Regel unabgeschirmte Zweidrahtleitungen im Sinne der Hochfrequenztechnik, die auch eine Antenneneigenschaft haben.

Da im Bereich des Hausanschlusses eines Gebäudes in der Regel auch die Eigentumsgrenze für das Kabelnetz der Energieversorger (weiche den Strom bis zum Gebäude liefern) verläuft, wird zweckmäßig an dieser Eigentumsgrenze (oder alternativ jenseits der Eigentumsgrenze, z.B. etagenweise im Gebäude) das Hochfrequenzsignal eingespeist. Hierbei ist es dringend erforderlich, bei der Einspeisung zu verhindern, daß das eingespeiste Hochfrequenzsignal sich (rückwärts) in das (den Strom bis zum Gebäude liefernde) Netz der Energieversorgungsunternehmen fortpflanzen kann. Deshalb wird die Einspeisung zweckmäßig mit einem Interface gemäß den Ansprüchen vorgenommen.

Weitere Merkmale und Vorteile ergeben sich aus den Ansprüchen und der nachfolgenden Beschreibung eines Ausführungsbeispiels anhand der Zeichnung. Dabei zeigt
- Fig. 1: als Blockschaltbild eine Einspeisung von Hochfrequenzsignalen und
- Fig. 2: als Blockschaltbild ein Interface (= Einspeiseweiche).

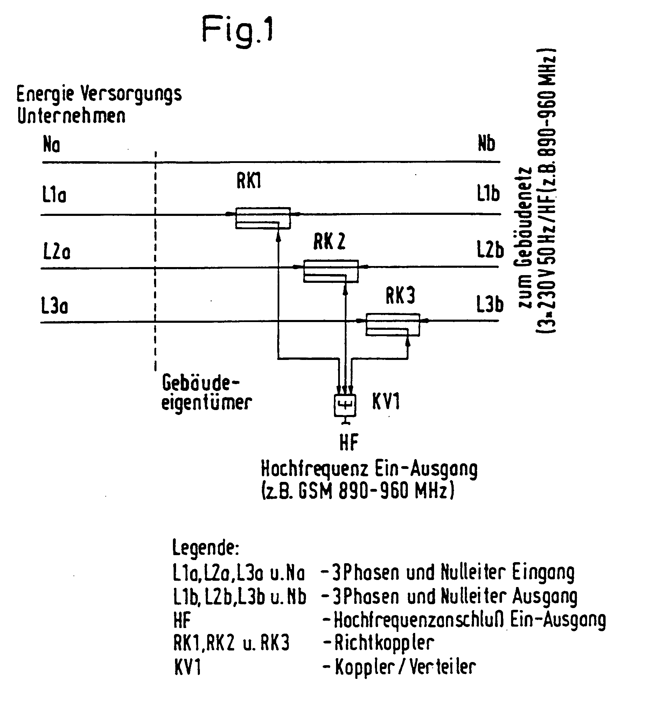

Figur 1 zeigt den Übergang von einem Stromnetz eines Energieversorgungsuntenehmens (links in Figur 1) zu einem beispielsweise privaten Gebäudenetz (rechts in Figur 1). Die Eigentumsgrenze für das Niederspannungsnetz zwischen dem Energieversorgungsunternehmen und dem Gebäudeeigentümer verläuft z.B. entlang der gestrichelten Linie in Figur 1. Die Einspeisung der Hochfrequenzenergie erfolgt im Eigentumsbereich des Gebäudeeigentümers.

Ein Niederspannungsenergienetz (z.B. 230 V) eines Gebäudes umfaßt im allgemeinen ein sternförmiges Kabelnetz von unabgeschirmten Mehrdrahtleitungen, hier neben dem Null-Leiter (Na auf seiten des Energieversorgungsunternehmens bzw. Nb auf seiten des Gebäudenetzes) die Dreiphasenleitungen (L1a, L2a, L3a auf seiten des Energieversorgungsunternehmens und L1b, L2b, L3b auf seiten des Gebäudenetzes). Diese Mehrdrahtleitungen (L1b, L2b, L3b) werden mit Hochfrequenzspannungen beaufschlagt, so daß sie einen Teil der eingespeisten Hochfrequenzenergie pro Längeneinheit der Leitung abstrahlen. Insofern haben sie damit ähnliche Eigenschaften wie ein Leck-Kabel. Dieser Effekt wird nun zur Hochfrequenz-Mobilfunkversorgung eines oder mehrerer Gebäude als Nutzeffekt verwendet.

Die Hochfrequenzeinspeisung wird dabei so gestaltet, daß keine Hochfrequenz in das Netz (Na, L1a, L2a, L3a) des Energieversorgungsuntenrehmens einstrahlt, also die Hochfrequenz nur in das Gebäudenetz (L1b, L2b, L3b) eingespeist wird, da es in jedem Energieversorgungsnetz eine klar definierte Eigentumsgrenze zwischen dem (in Figur 1 linken) Netz des Energieversorgungsuntenrehmes EVU und dem Netz des Gebäudeeigentümers (rechts in Figur 1) gibt.

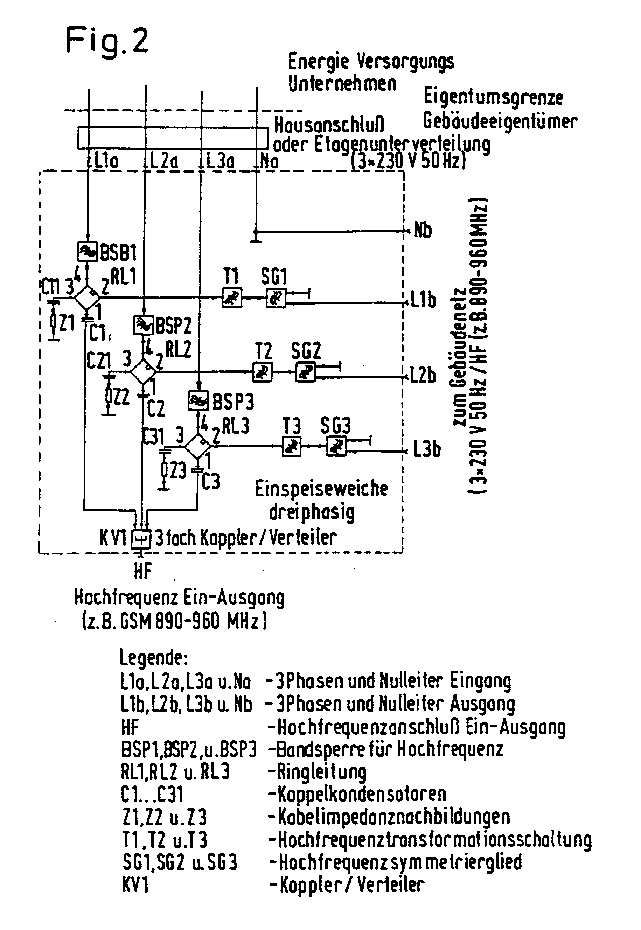

Die Hochfrequenzeinspeisung, also Einspeisung der Hochfrequenzpegel zur Mobilfunkversorgung im Gebäude erfolgt hier gleichmäßig in alle drei Phasen eines Drehstromnetzes. Wenn in einem konkreten Fall weniger als drei Phasen vorliegen, wird der Aufbau entsprechend reduziert. Eine Einspeisung kann also auch in nur eine Phase oder in zwei Phasen erfolgen. Die Beschreibung erfolgt nun am Beispiel einer Phase (L1b anhand Abbildung 2) und gilt sinngemäß auch für die im vorliegenden Beispiel ebenfalls mit Hochfrequenz beaufschlagten beiden anderen Phasen L2b, L3b.

Figur 2 verdeutlicht die Einspeisung in die Niederfrequenzpfade (= Stromleitungen des Netzes im Gebäude) zur Abstrahlung der HF-Energie durch diese Niederspannungsleitungen.

Der Anschluß L1 a ist hier der Eingang für die Niederfrequenz-Stromleitung (230 V 50 Hz, = NF) des Hausanschlusses eines Gebäudes oder beispielsweise alternativ der Etagenunterverteilung eines Gebäudes. Für die Niederfrequenz (230 V) hat die Hochfrequenz-Bahnsperre (BSP1) eine vernachlässigbare Einfügungsdämpfung. Die folgende Ringleitung RL1 stellt für die Niederfrequenz NF (= 230 V) eine sternförmige Verteilung dar und hat bei 50 Hz (= Niederfrequenz 230 V) allseitigen Durchgang von jedem Anschluß (1,2,3,4 an RL1 ebenso wie RL2 ebenso wie RL3) zu jedem anderen Anschluß (entsprechend 1,2,3,4 von RL1, RL2, RL3). An den Anschlüssen 1 und 3 einer Ringleitung RL1 wird die Niederfrequenz durch die Kondensatoren C1 und C11 abgeblockt; Entsprechendes gilt für die Kondensatoren C2, C21, C3, C31 an RL2 und RL3. Vom Anschluß 2 an RL1 gelangt die Niederfrequenz (230 V) über die Hochfrequenztransformations-Schaltung T1 und das Hochfrequenzsymmetrieglied SG1 zum Ausgang L1b. Diese beiden Schaltungen T1 und SG1 sind in koaxialer Bauform realisiert und haben mit ihrem Tiefpaßcharakter Durchlaßeigenschaften für die Niederfrequenz NF (230 V).

### Zum Hochfrequenz-Pfad (HF-Pfad):

An der Buchse HF in Figur 2 wird die abzustrahlende Hochfrequenzenergie (welche durch Abstrahlung von den Leitungen die Mobilfunkversorgung im Gebäude realisieren soll) eingespeist. Über den Dreifach-Koppler/Verteiler KV1 wird die eingespeiste Leitung hier gleichmäßig auf die drei Phasen L1, L2 und L3 verteilt. Sind nur eine oder zwei Phasen vorhanden, kann der Koppler entfallen oder er wird durch einen Zweifach-Koppler/Verteiler ersetzt. Über den Kondensator C1 gelangt die Hochfrequenz-Energie zum Eingang 1 der Ringleitung RL1. Die Ringleitung RL1 verteilt die an ihrem Eigang 1 eingespeiste gleichmäßig auf ihre Ausgänge 2 und 3. Sind die an den Ausgängen 2 und 3 von RL1 angeschlossenen Impedanzen im HF-Frequenzbereich identisch, ist der Eingang 4 von RL1 spannungslos und vom Eingang 1 von RL1 entkoppelt. Die Impedanz Z1 ist die Nachbildung der Impedanz des Gebäudenetzes und stellt somit die Entkopplung der beiden Eigänge sicher. Dennoch vorhandene geringe Teile der Hochfrequenz am Eingang 4 werden über die Bahnsperre BSP1 zusätzlich gedämpft. Durch dieses Zusammenwirken von Ringleitungen und Bandsperre wird eine ausreichende Entkopplung vom Netz des Energieversorgers EVU erreicht. Die Hochfrequenz am Ausgang 2 der Ringleitung gelangt über die Transformationsschaltung T 1 zum Symmetrieglied SG1. Die Transformationsschaltung T1 kann als koaxiale Lamda-1/4-Transformationsleitung ausgeführt sein und dient zur Anpassung an die Leitungsimpedanz des Gebäudenetzes. Die Realisierung als Lamda-1/4 (λ/4)-Leitung hat den Vorteil, daß die Schaltung grundsätzlich Tiefpaßcharakter aufweist und für sehr große Strombelastungen des NF-Pfades (230 V) ausgelegt werden kann. Das Symmerieglied SG1 kann ebenfalls in koaxialer Bauform als Lamda-1/4-Sperrtopf konstruiert werden und hat ebenfalls Tiefpaßcharakter mit großer Strombelastbarkeit. Vom HochfrequenzSymmetrieglied SG1 gelangt die HF zur Anschlußbuchse L1b und wird dort erdsymmetrisch (im HF-Bereich) in die entsprechende Phase des Gebäudenetzes eingespeist.

Das erfindungsgemäße Interface kann zur Versorgung von einem oder mehreren Mobilfunkendgeräten verwendet werden. Es können erfindungsgemäß ein oder mehrere Gebäude mit Hochfrequenz zur Mobilfunkkommunikation versorgt werden. Es ist auch möglich, in einem Gebäude eine etagenweise Versorgung durch Einkopplung in jeweils eine Etage vorzunehmen. Es wäre auch vorstellbar, unterschiedliche Etagen eines großen Gebäudes als eigene Funkzellen zu definieren und dabei unterschiedliche Einkopplung in die Niederspannungsenergienetze der einzelnen Etagen des Gebäudes vorzunehmen. Gebäude im Sinne der Ansprüche können verschiedenste Gebäude sein; insbesondere können es Hoch- und Tiefbauten unterschiedlichster Art sein. Beispielsweise können es Häuser, Hochhäuser, Brücken, Tunnel, U-Bahnen, Treppenhäuser oder Abschnitte von Gebäuden, wie beispielsweise Etagen von Gebäuden sein.

## Patentansprüche

1. Interface zum Einspeisen von Hochfrequenzsignalen in ein in einem Gebäude befindliches Netz zum Ermöglichen der Mobilfunk-Kommunikation zwischen einem Mobilfunknetz und mindestens einem im Gebäude befindlichen Mobilfunkendgerät,
wobei das Interface eine Einspeiseeinrichtung zum Einspeisen von an diesem Interface anlegbaren Hochfrequenzsignalen vom Mobilfunknetz in ein am Interface anschließbares gebäudeintemes Netz aufweist,
**dadurch gekennzeichnet,**
**dass** die abzustrahlende Hochfrequenzenergie über einen Koppler/Verteiler (KV1) gleichmäßig auf die Phasen (L1, L2, L3) der Niederfrequenz-Stromleitung verteilt und über einen Kondensator (C1, C2, C3) zu einem ersten Eingang (1) einer jeder Phase zugeordneten Ringleitung (RL1; RL2; RL3) geleitet wird, die die eingespeiste Leistung gleichmäßig auf einen ersten Ausgang (2) und einen zweiten Ausgang (3) verteilt,
**dass** bei identischen Impedanzen an den Ausgängen (2, 3) der Ringleitung (RL1, RL2, RL3) ein zweiter Eingang (4) der Ringleitung (RL1; RL2; RL3), an dem die Niederfrequenz-Zuleitung (L1a, L2a, L3a) angeschlossen ist, spannungslos und vom Eingang (1) der Hochfrequenz entkopppelt ist, und
**dass** eine an dem zweiten Ausgang (3) der Ringleitung (RL1, RL2, RL3) anliegende Impedanz (Z1, Z2, Z3) eine Nachbildung der am ersten Ausgang (2) anliegenden Impedanz des Gebäudenetzes ist.

2. Interface nach Anspruch 1,
**dadurch gekennzeichnet,**
**dass** vorhandene geringe Teile der Hochfrequenz am zweiten Eingang (4) der Ringleitung (RL1, RL2, RL3) über eine vor dem zweiten Eingang (4) der Ringleitung (RL1, RL2, RL3) liegende Bandsperre (BSP1, BSP2, BSP3) zusätzlich gedämpft werden.

3. Interface nach Anspruch 1,
**dadurch gekennzeichnet,**
**dass** die Hochfrequenz am ersten Ausgang (2) der Ringleitung (RL1, RL2, RL3) über eine Transformationsschaltung (T1, T2, T3) und eine Symmetrieglied (SG1, SG2, SG3) in das Gebäudenetz (L1b, L2b, L3b) gelangt.

4. Interface nach Anspruch 3,
**dadurch gekennzeichnet,**
**dass** die Transformationsschaltung (T1, T2, T3) als koaxiale λ/4-Transformationsleitung ausgeführt ist und zur Anpassung an die Leitungsimpedanz des Gebäudenetzes dient.

5. Interface nach Anspruch 3,
**dadurch gekennzeichnet,**
**dass** das Symmetrieglied (SG1, SG2, SG3) in koaxialer Bauform als λ/4-Sperrtopf ausgeführt ist und Tiefpaßcharakter mit großer Strombelastbarkeit besitzt.

6. Interface nach Anspruch 1,
**dadurch gekennzeichnet,**
**dass** das gebäudeinteme Netz ein niederfrequentes Netz ist.

7. Interface nach Anspruch 6,
**dadurch gekennzeichnet,**
**dass** das gebäudeinteme Netz ein Stromnetz ist.

## Claims

1. An interface for feeding high-frequency signals to a network located in a building in order to permit mobile radio communication between a mobile radio network and at least one mobile radio terminal located in the building,
wherein the interface has a feed device for feeding high-frequency signals, which can be applied to this interface, from the mobile radio network to a network which is located in the building and which is connectable to the interface,
**characterised in that**
the high-frequency energy to be emitted is uniformly distributed via a coupler/distributor (KV1) to the phases (L1, L2, L3) of the low-frequency power line and is conducted via a capacitor (C1, C2, C3) to a first input (1) of a ring main (RL1; RL2; RL3) which is associated with each phase and which distributes the supplied power uniformly to a first output (2) and a second output (3),
**in that**, in the case of identical impedances at the outputs (2, 3) of the ring main (RL1, RL2, RL3), a second input (4) of the ring main (RL1; RL2; RL3) is voltage-free and is decoupled from the high-frequency input (1), the low-frequency feed line (L1a, L2a, L3a) being connected to the second input (4), and
**in that** an impedance (Z1, Z2, Z3) applied to the second output (3) of the ring main (RL1, RL2, RL3) is a simulation of the building-network impedance applied to the first output (2).

2. An interface according to claim 1,
**characterised in that**
small parts of the high frequency present at the second input (4) of the ring main (RL1, RL2, RL3) are additionally attenuated by a band-stop filter (BSP1, BSP2, BSP3) lying upstream of the second input (4) of the ring main (RL1, RL2, RL3).

3. An interface according to claim 1,
**characterised in that**
the high frequency at the first output (2) of the ring main (RL1, RL2, RL3) passes into the building network (L1b, L2b, L3b) via a transformation circuit (T1, T2, T3) and a balun (SG1, SG2, SG3).

4. An interface according to claim 3,
**characterised in that**
the transformation circuit (T1, T2, T3) is constructed as a co-axial λ/4 transformation line and is provided for adaptation to the line impedance of the building network.

5. An interface according to claim 3,
**characterised in that**
the balun (SG1, SG2, SG3) is constructed in co-axial form as a λ/4 Sperrtopf and has a low-pass character with a large current-carrying capacity.

6. An interface according to claim 1,
**characterised in that**
the network inside the building is a low-frequency network.

7. An interface according to claim 6,
**characterised in that**
the network inside the building is a power-supply network.

## Revendications

1. Interface destinée à introduire des signaux à haute fréquence dans un réseau situé dans un bâtiment afin de permettre la communication par radiotéléphonie mobile entre un réseau de radiotéléphonie mobile et au moins un terminal de radiotéléphonie mobile situé dans le bâtiment, l'interface présentant un dispositif d'alimentation destiné à introduire des signaux à haute fréquence applicables à cette interface du réseau de radiotéléphonie mobile dans un réseau interne d'un bâtiment pouvant être raccordé à l'interface,
**caractérisée en ce que** l'énergie à haute fréquence à diffuser est répartie par le biais d'un coupleur/répartiteur (KV1) de manière égale sur les phases (L1, L2, L3) de la conduite de courant à basse fréquence et guidée par le biais d'un condensateur (C1, C2, C3) jusqu'à une première entrée (1) d'une ligne en boucle (RL1, RL2, RL3) associée à chaque phase, laquelle ligne en boucle répartit la puissance introduite de manière égale sur une première sortie (2) et une seconde sortie (3), **en ce que**, en cas d'impédances identiques aux sorties (2, 3) de la ligne en boucle (RL1, RL2, RL3), une seconde entrée (4) de la ligne en boucle (RL1, RL2, RL3), à laquelle est raccordée la conduite d'alimentation à basse fréquence (L1 a, L2a, L3a), est hors tension et découplée de l'entrée (1) de la haute fréquence et **en ce qu'**une impédance (Z1, Z2, Z3) présente à la seconde sortie (3) de la ligne en boucle (RL1, RL2, RL3) est une simulation de l'impédance du réseau du bâtiment, présente à la première sortie (2).

2. Interface selon la revendication 1,
**caractérisée en ce que** de faibles parties de la haute fréquence présentes au niveau de la seconde entrée (4) de la ligne en boucle (RL1, RL2, RL3) sont en plus atténuées par le biais d'un filtre coupe-bande (BSP1, BSP2, BSP3) situé avant la seconde entrée (4) de la ligne en boucle (RL1, RL2, RL3).

3. Interface selon la revendication 1,
**caractérisée en ce que** la haute fréquence présente au niveau de la première sortie (2) de la ligne en boucle (RL1, RL2, RL3) accède par l'intermédiaire d'un circuit de transformation (T1, T2, T3) et d'un organe de symétrie (SG 1, SG2, SG3) dans le réseau du bâtiment (L1 b, L2b, L3b).

4. Interface selon la revendication 3,
**caractérisée en ce que** le circuit de transformation (T1, T2, T3) est réalisé sous la forme d'une conduite de transformation coaxiale λ/4 et sert à l'adaptation à l'impédance de conduite du réseau du bâtiment.

5. Interface selon la revendication 3,
**caractérisée en ce que** l'organe de symétrie (SG1, SG2, SG3) est réalisé sous une forme coaxiale en tant qu'antenne dipôle à tube coaxial λ/4 et possède une caractéristique passe-bas ayant une grande intensité de courant maximale admissible.

6. Interface selon la revendication 1,
**caractérisée en ce que** le réseau interne du bâtiment est un réseau à basse fréquence.

7. Interface selon la revendication 6,
**caractérisée en ce que** le réseau interne du bâtiment est un réseau de courant électrique.
